# EUROPEAN PATENT SPECIFICATION

(11) **EP 3 758 362 B1**
(45) Date of publication and mention of the grant of the patent: **24.04.2024**
(21) Application number: 20275112.9
(22) Date of filing: 23.06.2020
(51) Int. Cl.: H05B 41/288, H04N 23/56, H04N 23/73, H04N 23/74

(54) **METHOD AND APPARATUS FOR POWERING AN ARC-DISCHARGE LAMP FOR MOTION PICTURE FILMING**
VERFAHREN UND VORRICHTUNG ZUM BETREIBEN EINER BOGENENTLADUNGSLAMPE FÜR FILMAUFNAHMEN
PROCÉDÉ ET APPAREIL POUR ALIMENTER UNE LAMPE DE DÉCHARGE D'ARC POUR FILMER DES IMAGES EN MOUVEMENT

(30) Priority: 24.06.2019 GB 201909008
(43) Date of publication of application: 30.12.2020
(73) Proprietor: Power Gems Ltd, Manchester M44 6BA (GB)
(72) Inventor: Ellams, Philip, Manchester, M44 6BA (GB); Berman, Jason, Eastbourne, East Sussex BN21 3YA (GB); Price, Stephen, Eastbourne, East Sussex BN21 3YA (GB)
(74) Representative: Stephenson, Philip

(56) References cited:
- WO-A1-2010/049845
- WO-A2-2004/008742
- US-A1- 2009 135 262

## Description

The present invention relates to an apparatus and method for safely powering an arc-discharge lamp for motion picture filming with an arbitrary external synchronising signal.

Arc-discharge lamps are used in motion picture filming applications due to their high efficiency, output, and colour spectrum which can be made to simulate sunlight. Due to characteristics of arc discharge lamps they cannot be directly connected to the mains supply as uncontrolled amounts of current would flow through the lamp. Instead they are supplied by a special type of power supply known as a ballast. The ballast can consist of a simple magnetic coil however this has a significant disadvantage that the lamp current varies in a near-sinusoidal manner which causes a corresponding large variation in light output which in filming applications can cause flickering of the recorded image. To prevent this problem electronic ballasts are used which drive square wave current through the lamp to produce a light output with very low ripple. In theory this allows the camera to operate at any frame rate without flicker occurring in the recorded image.

Despite the use of electronic ballasts some residual flicker can exist in the light output from the arc lamp which may result in artefacts in recorded image and this tends to become more of an issue as the frame rate of the camera is increased as required by slow-motion shots. The residual flicker has a number of primary causes including:
1. The square wave lamp current takes a finite amount of time to reverse direction which leads to a momentary dip in light output. This becomes more of a problem at high frame rates where the exposure time is shorter.
2. The current can take a slightly different path between the electrodes in the lamp on each half cycle of the waveform, and the brightest part of the arc varies with each half cycle which can lead to rhythmic variation of the light output
3. Resonances in the gases in the lamp can cause the arc to flutter.

Above a certain frequency very strong resonances can occur in the lamp - sufficient to extinguish the arc or even fracture the lamp. There is also lower limit on the lamp operating frequency due to the electron emission characteristics of the electrodes. This results in a safe window of operating frequencies for the lamp which is quite narrow - typically in the range 50-1000Hz depending on the lamp type and size.

The issue of deviation of the arc path tends to be improved by operating the lamp at higher frequencies, but this is also a region where lamp resonances can become troublesome, so it is advantageous for the user to be able to 'tune' or select a frequency of operation which minimises arc deviation but also avoids resonant frequencies. However the range of frequency is limited by the safe operating window as described above.

The issue which has not to date been fully addressed is the transition of the lamp current (issue 1). It is known that when the operating frequency of the ballast is close to the frame rate of the camera then this type of problem tends to be reduced. However because of the resonance issues mentioned currently the ballast is often tuned to an operating frequency which bears no relation to the camera frame rate.

Camera synchronization is frequently referred to in the literature, but almost always is referring to flash synchronization, which is not the subject of the invention.

US2009135262 discloses an external device, for example a flash device, that is wirelessly connectable to a camera. The external device includes: a synchronization data creation unit that outputs synchronization data for synchronization of timing of processing related to photography. The unit that detects the synchronization data before all of the other received communication packets received have been read.

It is therefore an aim of the present invention to provide an apparatus which addresses the abovementioned problems.

It is a further aim of the invention to provide a method of safely powering an arc discharge lamp that addresses the abovementioned problems.

In a first aspect of the invention there is provided an apparatus to power an arc discharge lamp for motion picture filming, according to claim 1.

In a preferred embodiment of the invention the synchronisation signals or pulses originate or are provided by a camera. Typically the camera is a motion picture camera.

Typically the apparatus enables the user to synchronise the output frequency of the ballast to the frame rate of the camera. Further typically, the multiplier or divider means forces the ballast means current to change direction when the camera shutter is closed.

Typically the shutter closed condition occurs with each frame when the 'shutter angle' is less than 360°. The skilled person will understand that with contemporary digital cameras 'shutter closed' refers to a period when the image sensor is not responsive to light.

In a preferred embodiment the user is able to select operating frequencies for the lamp which are exact multiples or sub-multiples of the camera frame rate to maintain synchronism, while avoiding lamp resonances.

Typically the synchronisation signals or pulses are arbitrary. Further typically the arbitrary synchronisation signal or pulse can have unknown frequency, duty cycle and/or persistence, whereby the signal may be interrupted at any time.

Typically, pulses which are too short or too long depend on the lamp type and size.

In the first aspect of the invention the pulse limits, pulses which are too long or too short, can be predetermined by the user.

Preferably the default operating pulses are between frequency limits. In one embodiment pulses which are too short or high are above 1000 Hz.

In one embodiment pulses which are too long or low are below 50 Hz.

In a preferred embodiment of the invention the timing means is a timing circuit. Typically the timing circuit is an integrated circuit. The skilled person will appreciate that the timing means could be implemented on a microprocessor controlled circuit or integrated circuit.

Typically the default operating pulses is an electrical signal and/or current frequencies. Further typically first and further operating pulses are electrical signals and/or current frequencies.

In one embodiment of the invention the signal input means is configured to scan the synchronisation or input signals and/or pulses for DMX information or information packets. The skilled person will appreciate that DMX refers to Digital Multiplex and/or DMX512 which is a standard for digital communication networks, commonly used to control lighting and other apparatus based on RS-485.

In a preferred embodiment, if an error is detected, the first or further operating pulses are prevented from passing through the ballast. Typically if an error is detected, the operating pulses in the error state or causing the error are prevented from passing through the ballast output. Further typically the ballast output includes an inverter.

In one embodiment, if an error is detected, then within the space of one maximum pulse length the operating frequency or synchronisation signals are prevented from passing through to the ballast output

In a preferred embodiment, if an error is detected, the operating pulses or synchronisation signal is switched over to the fixed-frequency or default oscillator to ensure that the lamp remains running in a safe manner.

Typically, following the detection of one or more 'good' or non-error operating pulses or synchronisation pulses, the default oscillator is disconnected and the operating frequency pulses or synchronisation pulses are directed towards the ballast.

In a preferred embodiment the operating frequency pulses or synchronisation pulses pass through a minimum pulse width circuit means. Typically the minimum pulse width circuit means prevents any rapid pulse changes occurring, such as may happen during a connector being unplugged.

In a preferred embodiment the apparatus includes a delay circuit means. Typically the delay circuit means is located after the minimum pulse width circuit means. Further typically the delay circuit means allows time positioning of the lamp current transition relative to the operation of the camera shutter activation.

Typically once the operating pulses or synchronisation signal reaches the ballast it is used to directly switch the transistors of the output `H-bridge' which is responsible for reversing the output lamp current.

The skilled person will understand that the components of the apparatus, including the H bridges are available as integrated circuits, or can be built from discrete components.

In a non-claimed second aspect there is provided a system to provide power an arc discharge lamp for motion picture filming, said system including;
An electronic ballast means to drive a substantially square wave AC current to said lamp from the ballast means output,
a signal input means which receives synchronisation signals or pulses into the apparatus,
a multiplier or divider means which multiplies or divides the synchronisation pulses received by the signal input means to provide at least a first operating pulse for the ballast means, and wherein the apparatus includes a timing means which is configured to analyse the at least the first operating signal before it reaches the ballast means, said timing means configured to synchronise the operating signal such that the output frequency of the ballast is synchronised to the frame rate of the camera.

Preferably the timing means forces the ballast output current to change direction when the camera shutter is closed.

In a third aspect of the invention there is provided a method to power an arc discharge lamp in a manner suitable for motion picture filming, said method including the step of synchronising the output AC frequency of a ballast to a multiple or submultiple of the frame rate of the camera using an apparatus of claim 1, thereby forcing the current to change direction when the camera shutter is closed.

In a further non-claimed aspect there is provided an apparatus to control the power to an arc discharge lamp in a manner suitable for motion picture filming, said apparatus configured to receive a signal from the motion picture digital camera or a further apparatus in use indicative of the frame rate of the camera, said apparatus connected to a ballast power supply for the lamp in use, wherein the apparatus includes a timing means, said timing means configured to synchronise the output AC frequency of the ballast to a multiple or submultiple of the frame rate of the camera.

Typically the apparatus is used in a system including a motion picture camera and at least one arc discharge lamp.

In a yet further non-claimed aspect there is a method of operating and/or constructing an apparatus including a timing means configured to synchronise the output AC frequency of the ballast to a multiple or submultiple of the frame rate of the camera.

Specific embodiments of the invention are now described with reference to the following figures, wherein;

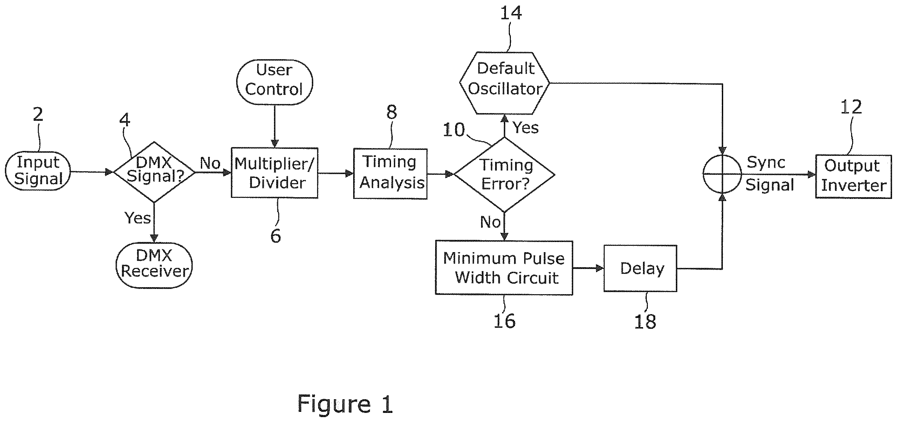

Figure 1 shows a flow chart of one embodiment of the invention.

In broad terms the object of the invention is to synchronise the output frequency of the ballast to the frame rate of the camera, more particularly forcing the current to change direction when the camera shutter is closed (which occurs with each frame when the 'shutter angle' is less than 360°. With modern digital cameras 'shutter closed' refers to a period when the image sensor is not responsive to light). The invention allows the user to select operating frequencies for the lamp which are exact multiples or sub-multiples of the camera frame rate to maintain synchronism, while avoiding lamp resonances.

An important function of the invention is to ensure safe operation of the lamp under all circumstances. The synchronising signal is arbitrary and has unknown frequency, duty cycle and persistence (the signal may be interrupted at any time). As mentioned, AC-powered arc discharge lamps have a narrow window of operation as regards frequency, and also can only tolerate very low levels of DC current component to prevent migration of the lamp filling chemicals, or overheating of one of the electrodes. Even a short period of DC operation can result in destruction of the lamp. As a consequence the circuit of the invention has to ensure that the operating restrictions of the lamp are observed even when the synchronising signal disappears, or changes in frequency as would occur when the camera frame rate is adjusted.

A further feature of the invention is to make use an existing serial communications system to transmit the signal to the ballast. In the entertainment field DMX is a well know communication standard (based on RS-485) and many products have DMX input sockets. The invention uses DMX hardware to get the signal into the ballast, simplifying the implementation of the invention. Signals coming into the ballast are examined, and DMX information data is passed for normal control use, however if sync signals are detected the system switches over to use these pulses to synchronise the output frequency of the ballast.

The flow chart of figure 1 shows the implementation of the invention. The input signal 2 is firstly scanned 4 to see if it contains DMX information packets. If DMX is detected, then this is treated in the regular manner as a control signal. Otherwise, if synchronisation pulses are detected these are forwarded to a multiplier/divider circuit 6. The sync pulses are generated by the shutter synchronisation output of the camera (typically called 'F-Sync' or 'Strobe' signals). This allows the user to vary the operating frequency of the ballast in steps which are multiples, or submultiples of the camera frame rate. The divided/multiplied signal is then analysed by a timing circuit 8. This checks for several error conditions:
- The current pulse is compared to the previous pulse to confirm symmetry or detect a changing frequency
- Pulses which are too short
- Pulses which are too long
- Total signal loss

If an error is detected 10, then within the space of one maximum pulse length the synchronisation signals are prevented from passing through to the ballast output (inverter) stage 12, and the synchronisation signal is switched over to a fixed-frequency (default) oscillator 14 to ensure that the lamp remains running in a safe manner.

Following the detection of a number of 'good' synchronisation pulses the default oscillator 14 is disconnected from the output and the sync pulses are directed towards the ballast, passing through a further two processing stages. Firstly the sync pulses pass through a minimum pulse width circuit 16 which prevents any rapid pulse changes occurring, such as may happen during a connector being unplugged. Such rapid changes may not be accurately detected by the timing analysis circuit. Following this is a delay circuit 18 which allows time positioning of the lamp current transition relative to the operation of the camera shutter activation.

Once the synchronisation signal reaches the ballast it is used to directly switch the transistors of the output 'H-bridge' which is responsible for reversing the output lamp current.

Further aspects of the invention include:
- Development of synchronisation system for the direct control of the output stage of an AC-lamp ballast which has the protective circuits necessary to safely accept an arbitrary input signal.
- A synchronisation system for an AC lamp ballast which allows the user to select a range of operating frequencies which are multiples or submultiples of the synchronising source. Changing between frequencies can be done safely due to the protection systems inherent in the invention.
- An AC-lamp synchronisation system which allows the user to adjust the phase of the ballast sync to the camera shutter operation (using a delay circuit) to allow the output current of the ballast to be reversed at the optimum time for avoiding artefacts in the recorded image.
- A detection system for distinguishing between a synchronisation pulse stream and DMX data, which allows the synchronisation signal to be distributed and input to the ballast via DMX sockets which already exist, permitting upgrade of existing product, and the use of commonly available cables and other DMX equipment.

## Claims

1. Apparatus to power an arc discharge lamp for motion picture filming, said apparatus including;
an electronic ballast means to drive a substantially square wave AC current to said lamp from the output of the electronic ballast means (12),
a default oscillator means (14) which is configured to provide a default operating ulse to the electronic ballast means which synchronises the output square wave frequency of the electronic ballast means (12) to the default oscillator means (14),
a signal input means (2) configured to receive synchronisation pulses into the apparatus,
a multiplier or divider means (6) configured to multiply or divide the synchronisation pulses received by the signal input means to provide first operating pulses for the electronic ballast means, and
**characterised in that** the apparatus includes a timing means (8) configured to analyse the first operating pulses before they reach the electronic ballast means, said timing means (8) configured to detect any one, any combination of, or all of the following error conditions, whereby;
- a current first operating pulse of said first operating pulses is compared to a previous pulse of said first operating pulses and/or the default operating pulse to confirm symmetry or detect a changing frequency,
- first operating pulses that are too short,
- first operating pulses that are too long, and/or
- signal loss
whereby first operating pulses which are too long or too short are predetermined by a user,
wherein if an error condition is detected, said apparatus is configured to prevent said current first operating pulse from passing through to the electronic ballast means.

2. Apparatus to power an arc discharge lamp according to claim 1 **characterised in that** the synchronisation pulses originate or are provided by a motion picture camera.

3. Apparatus to power an arc discharge lamp according to claim 1 **characterised in that** the multiplier or divider means is configured to force the electronic ballast means current to change direction when a camera shutter is closed.

4. Apparatus to power an arc discharge lamp according to claim 1 **characterised in that** the user is able to select operating frequencies for the lamp which are exact multiples or sub-multiples of a camera frame rate used in the motion picture filming to maintain synchronism.

5. Apparatus to power an arc discharge lamp according to claim 1 **characterised in that** the synchronisation pulses are arbitrary.

6. Apparatus to power an arc discharge lamp according to claim 5 **characterised in that** the arbitrary synchronisation pulses can have unknown frequency, duty cycle and/or persistence, whereby the synchronisation pulses are interrupted at any time.

7. Apparatus to power an arc discharge lamp according to claim 1 **characterised in that** the default operating pulses are between frequency limits of above 1000 Hz for pulses which are too short or high and/or below 50 Hz for pulses which are too long or low.

8. Apparatus to power an arc discharge lamp according to claim 1 **characterised in that** the timing means is implemented on a microprocessor controlled circuit or integrated circuit.

9. Apparatus to power an arc discharge lamp according to claim 1 **characterised in that** the default operating pulses are electrical signal and/or current frequencies.

10. Apparatus to power an arc discharge lamp according to claim 9 **characterised in that** the operating pulses are electrical signals and/or current frequencies.

11. Apparatus to power an arc discharge lamp according to claim 1 **characterised in that** the signal input means is configured to scan the synchronisation pulses for DMX information or information packets.

12. Apparatus to power an arc discharge lamp according to claim 1 **characterised in that** if an error condition is detected, within the space of one maximum pulse length the first operating pulse is prevented from passing through to the output of the electronic ballast means.

13. Apparatus to power an arc discharge lamp according to claim 12 **characterised in that** if an error condition is detected, the first operating pulse is switched over to the default oscillator means to ensure that the lamp remains running in a safe manner.

14. Apparatus to power an arc discharge lamp according to claim 1 **characterised in that** following the detection of one or more non-error conditions the apparatus is configured to disconnect the default oscillator means and the first operating pulses are directed towards the electronic ballast means.

15. Apparatus to power an arc discharge lamp according to claim 1 **characterised in that** the apparatus includes a minimum pulse width circuit means through which the first operating pulses or the synchronisation pulses pass through said minimum pulse width circuit configured to prevent any rapid pulse changes occurring.

16. Apparatus to power an arc discharge lamp according to claim 15 **characterised in that** the apparatus includes a delay circuit means located after the minimum pulse width circuit means configured to allow time positioning of a lamp current transition relative to an operation of a camera shutter activation.

17. A method to power an arc discharge lamp in a manner suitable for motion picture filming, said method including the step of synchronising the output AC frequency of a ballast to a multiple or submultiple of the frame rate of a camera that is being used in the motion picture filming, using an apparatus of claim 1, **characterised in that** the multiplier or divider means (6) is configured to force the current to change direction when the camera shutter is closed.

## Patentansprüche

1. Vorrichtung zum Betreiben einer Bogenentladungslampe für Filmaufnahmen, wobei die genannte Vorrichtung Folgendes beinhaltet;
ein elektronisches Vorschaltmittel zum Treiben eines im Wesentlichen rechteckförmigen Wechselstroms vom Ausgang des elektronischen Vorschaltmittels (12) zur genannten Lampe,
ein Vorgabeoszillatormittel (14), das zum Anlegen eines vorgegebenen Betriebsimpulses an das elektronische Vorschaltmittel konfiguriert ist, das die Ausgangs-Rechteckwellenfrequenz des elektronischen Vorschaltmittels (12) mit dem Vorgabeoszillatormittel (14) synchronisiert,
ein Signaleingangsmittel (2), das zum Empfangen von Synchronisationsimpulsen in die Vorrichtung konfiguriert ist,
ein Multiplizierer- oder Teilermittel (6), das zum Multiplizieren oder Teilen der vom Signaleingangsmittel empfangenen Synchronisationsimpulse konfiguriert ist, um erste Betriebsimpulse für das elektronische Vorschaltmittel bereitzustellen, und
**dadurch gekennzeichnet, dass** die Vorrichtung ein Zeitsteuerungsmittel (8) beinhaltet, das zum Analysieren der ersten Betriebsimpulse, bevor sie das elektronische Vorschaltmittel erreichen, konfiguriert ist, wobei das genannte Zeitsteuerungsmittel (8) zum Erkennen von einem oder einer Kombination oder allen der folgenden Fehlerzustände konfiguriert ist, wodurch
- ein aktueller erster Betriebsimpuls der genannten ersten Betriebsimpulse mit einem vorhergehenden Impuls der genannten ersten Betriebsimpulse und/oder dem vorgegebenen Betriebsimpulse verglichen wird, um Symmetrie zu bestätigen oder eine sich ändernde Frequenz zu erkennen,
- erste Betriebsimpulse, die zu kurz sind,
- erste Betriebsimpulse, die zu lang sind, und/oder
- Signalverlust,
bei dem erste Betriebsimpulse, die zu lang oder zu kurz sind, von einem Benutzer im Voraus bestimmt werden,
wodurch die genannte Vorrichtung bei Erkennung eines Fehlerzustands zum Hindern des genannten aktuellen ersten Betriebsimpulses am Durchgang durch das elektronische Vorschaltmittel konfiguriert ist.

2. Vorrichtung zum Betreiben einer Bogenentladungslampe nach Anspruch 1, **dadurch gekennzeichnet, dass** die Synchronisationsimpulse von einer Laufbildkamera stammen oder bereitgestellt werden.

3. Vorrichtung zum Betreiben einer Bogenentladungslampe nach Anspruch 1, **dadurch gekennzeichnet, dass** das Multiplizierer- oder Teilermittel zum Zwingen des Stroms des elektronischen Vorschaltmittels, seine Richtung zu ändern, wenn ein Kameraverschluss geschlossen wird, konfiguriert ist.

4. Vorrichtung zum Betreiben einer Bogenentladungslampe nach Anspruch 1, **dadurch gekennzeichnet, dass** der Benutzer Betriebsfrequenzen für die Lampe wählen kann, die genaue Vielfache oder Teilvielfache einer Kamerabildfrequenz sind, die bei Filmaufnahmen zum Aufrechterhalten des Synchronismus verwendet werden.

5. Vorrichtung zum Betreiben einer Bogenentladungslampe nach Anspruch 1, **dadurch gekennzeichnet, dass** die Synchronisationsimpulse willkürlich sind.

6. Vorrichtung zum Betreiben einer Bogenentladungslampe nach Anspruch 5, **dadurch gekennzeichnet, dass** die willkürlichen Synchronisationsimpulse eine unbekannte Frequenz, ein unbekanntes Tastverhältnis und/oder eine unbekannte Dauer haben können, wodurch die Synchronisationsimpulse zu jeder Zeit unterbrochen werden.

7. Vorrichtung zum Betreiben einer Bogenentladungslampe nach Anspruch 1, **dadurch gekennzeichnet, dass** die vorgegebenen Betriebsimpulse zwischen Frequenzgrenzen von über 1000 Hz für Impulse, die zu kurz oder hoch sind, und/oder unter 50 Hz für Impulse, die zu lang oder tief sind, liegen.

8. Vorrichtung zum Betreiben einer Bogenentladungslampe nach Anspruch 1, **dadurch gekennzeichnet, dass** das Zeitsteuerungsmittel auf einer mikroprozessorgesteuerten Schaltung oder einer integrierten Schaltung umgesetzt ist.

9. Vorrichtung zum Betreiben einer Bogenentladungslampe nach Anspruch 1, **dadurch gekennzeichnet, dass** die vorgegebenen Betriebsimpulse ein elektrisches Signal und/oder Stromfrequenzen sind.

10. Vorrichtung zum Betreiben einer Bogenentladungslampe nach Anspruch 9, **dadurch gekennzeichnet, dass** die Betriebsimpulse elektrische Signale und/oder Stromfrequenzen sind.

11. Vorrichtung zum Betreiben einer Bogenentladungslampe nach Anspruch 1, **dadurch gekennzeichnet, dass** das Signaleingangsmittel zum Abtasten der Synchronisationsimpulse auf DMX-Informationen oder -Informationspakete konfiguriert ist.

12. Vorrichtung zum Betreiben einer Bogenentladungslampe nach Anspruch 1, **dadurch gekennzeichnet, dass** bei Erkennung eines Fehlerzustands im Bereich einer maximalen Impulslänge verhindert wird, dass der erste Betriebsimpuls zum Ausgang des elektronischen Vorschaltmittels durchgelassen wird.

13. Vorrichtung zum Betreiben einer Bogenentladungslampe nach Anspruch 12, **dadurch gekennzeichnet, dass** bei Erkennung eines Fehlerzustands der erste Betriebsimpuls auf das Vorgabe-Oszillatormittel umgeschaltet wird, um sicherzustellen, dass die Lampe weiterhin sicher betrieben wird.

14. Vorrichtung zum Betreiben einer Bogenentladungslampe nach Anspruch 1, **dadurch gekennzeichnet, dass** die Vorrichtung nach der Erkennung von einer oder mehreren fehlerfreien Bedingungen zum Abschalten des Vorgabeoszillatormittels konfiguriert ist und die ersten Betriebsimpulse zum elektronischen Vorschaltgerät geleitet werden.

15. Vorrichtung zum Betreiben einer Bogenentladungslampe nach Anspruch 1,
**dadurch gekennzeichnet, dass** die Vorrichtung ein Mindestimpulsbreitenschaltungsmittel beinhaltet, durch das die ersten Betriebsimpulse oder die Synchronisationsimpulse hindurchgehen, wobei die genannte Mindestimpulsbreitenschaltung zum Verhindern des Stattfindens von schnellen Impulsänderungen konfiguriert ist.

16. Vorrichtung zum Betreiben einer Bogenentladungslampe nach Anspruch 15, **dadurch gekennzeichnet, dass** die Vorrichtung ein nach dem Mindestimpulsbreitenschaltungsmittel angeordnetes Verzögerungsschaltungsmittel beinhaltet, das zum Ermöglichen einer zeitlichen Positionierung eines Lampenstromübergangs relativ zum Betrieb einer Kameraverschlussauslösung konfiguriert ist.

17. Verfahren zum Betreiben einer Bogenentladungslampe auf eine für Filmaufnahmen geeignete Weise, wobei das genannte Verfahren den Schritt des Synchronisierens der Ausgangs-Wechselstromfrequenz eines Vorschaltgeräts mit einem Vielfachen oder Teilvielfachen der Bildfrequenz einer Kamera, die bei den Filmaufnahmen verwendet wird, unter Verwendung einer Vorrichtung nach Anspruch 1 beinhaltet, **dadurch gekennzeichnet, dass** das Multiplizierer- oder Teilermittel (6) zum Zwingen des Stroms, seine Richtung zu ändern, wenn der Kameraverschluss geschlossen wird, konfiguriert ist.

## Revendications

1. Appareil pour alimenter une lampe à décharge en arc pour filmer des images en mouvement, ledit appareil incluant ;
un moyen de ballast électronique pour amener un courant CA substantiellement en onde carrée à ladite lampe à partir de la sortie du moyen de ballast électronique (12),
un moyen d'oscillateur par défaut (14) qui est configuré pour fournir une impulsion opérationnelle par défaut au moyen de ballast électronique qui synchronise la fréquence de l'onde carrée de sortie du moyen de ballast électronique (12) vers le moyen d'oscillateur par défaut (14),
un moyen d'entrée de signal (2) configuré pour recevoir des impulsions de synchronisation dans l'appareil,
un moyen de multiplication ou de division (6) configuré pour multiplier ou diviser les impulsions de synchronisation reçues par le moyen d'entrée de signal afin de fournir des premières impulsions opérationnelles pour le moyen de ballast électronique, et
**caractérisé en ce que** l'appareil inclut un moyen de temporisation (8) configuré pour analyser les premières impulsions opérationnelles avant qu'elles n'atteignent le moyen de ballast électronique, ledit moyen de temporisation (8) étant configuré pour détecter n'importe laquelle, n'importe quelle combinaison de, ou la totalité des conditions d'erreur suivantes, en vertu desquelles ;
- une première impulsion opérationnelle actuelle desdites premières impulsions opérationnelles est comparée à une impulsion antérieure desdites premières impulsions opérationnelles et/ou à l'impulsion opérationnelle par défaut pour confirmer la symétrie ou détecter une fréquence changeante,
- les premières impulsions opérationnelles qui sont trop courtes,
- les premières impulsions opérationnelles qui sont trop longues, et/ou
- une perte de signal
en vertu de quoi des premières impulsions opérationnelles qui sont trop longues ou trop courtes sont prédéterminées par un utilisateur,
dans lequel si une condition d'erreur est détectée, ledit appareil est configuré pour empêcher ladite première impulsion opérationnelle actuelle de passer jusqu'au moyen de ballast électronique.

2. Appareil pour alimenter une lampe à décharge en arc selon la revendication 1 **caractérisé en ce que** les impulsions de synchronisation ont pour origine, ou sont fournies par une caméra cinématographique.

3. Appareil pour alimenter une lampe à décharge en arc selon la revendication 1 **caractérisé en ce que** le moyen de multiplication ou de division est configuré pour forcer le courant du moyen de ballast électronique à changer de direction lorsqu'un obturateur de caméra est fermé.

4. Appareil pour alimenter une lampe à décharge en arc selon la revendication 1 **caractérisé en ce que** l'utilisateur est apte à sélectionner des fréquences opérationnelles pour la lampe qui sont des multiples ou des sous-multiples exacts d'une cadence de trame de caméra utilisée dans le filmage d'images en mouvement afin de maintenir le synchronisme.

5. Appareil pour alimenter une lampe à décharge en arc selon la revendication 1 **caractérisé en ce que** les impulsions de synchronisation sont arbitraires.

6. Appareil pour alimenter une lampe à décharge en arc selon la revendication 5 **caractérisé en ce que** les impulsions de synchronisation arbitraires peuvent avoir une fréquence, un cycle de service et/ou une persistance inconnu/e, en vertu de quoi les impulsions de synchronisation sont interrompues à n'importe quel moment.

7. Appareil pour alimenter une lampe à décharge en arc selon la revendication 1 **caractérisé en ce que** les impulsions opérationnelles par défaut se situent entre des limites de fréquence allant au-delà de 1000 Hz pour des impulsions qui sont trop courtes ou élevées et/ou en dessous de 50 Hz pour des impulsions qui sont trop longues ou basses.

8. Appareil pour alimenter une lampe à décharge en arc selon la revendication 1 **caractérisé en ce que** le moyen de temporisation est mis en oeuvre sur un circuit intégré ou un circuit commandé par microprocesseur.

9. Appareil pour alimenter une lampe à décharge en arc selon la revendication 1 **caractérisé en ce que** les impulsions opérationnelles par défaut sont des signaux électriques et/ou des fréquences de courant.

10. Appareil pour alimenter une lampe à décharge en arc selon la revendication 9 **caractérisé en ce que** les impulsions opérationnelles sont des signaux électriques et/ou des fréquences de courant.

11. Appareil pour alimenter une lampe à décharge en arc selon la revendication 1 **caractérisé en ce que** le moyen d'entrée de signal est configuré pour balayer les impulsions de synchronisation pour des informations DMX ou des paquets d'information.

12. Appareil pour alimenter une lampe à décharge en arc selon la revendication 1 **caractérisé en ce que**, si une condition d'erreur est détectée, au sein de l'espace d'une longueur d'impulsion maximum, la première impulsion opérationnelle est empêchée de se rendre jusqu'à la sortie du moyen de ballast électronique.

13. Appareil pour alimenter une lampe à décharge en arc selon la revendication 12 **caractérisé en ce que**, si une condition d'erreur est détectée, la première impulsion opérationnelle est commutée vers le moyen d'oscillateur par défaut pour veiller à ce que la lampe continue de fonctionner selon une manière sûre.

14. Appareil pour alimenter une lampe à décharge en arc selon la revendication 1 **caractérisé en ce qu'**à la suite de la détection d'une ou de plusieurs conditions de non erreur, l'appareil est configuré pour déconnecter le moyen d'oscillateur par défaut et les premières impulsions opérationnelles sont dirigées vers le moyen de ballast électronique.

15. Appareil pour alimenter une lampe à décharge en arc selon la revendication 1 **caractérisé en ce que** l'appareil inclut un moyen de circuit à largeur d'impulsion minimum à travers lequel les premières impulsions opérationnelles ou les impulsions de synchronisation passent, ledit circuit à largeur d'impulsion minimum étant configuré pour éviter que de quelconques changements d'impulsion rapides ne se produisent.

16. Appareil pour alimenter une lampe à décharge en arc selon la revendication 15 **caractérisé en ce que** l'appareil inclut un moyen de circuit à retardement localisé après le moyen de circuit à largeur d'impulsion minimum configuré pour permettre un positionnement temporel d'une transition de courant de lampe relativement à une opération d'activation de l'obturateur de caméra.

17. Procédé pour alimenter une lampe à décharge en arc suivant une manière convenant au filmage d'images en mouvement, ledit procédé incluant l'étape consistant à synchroniser la fréquence CA de sortie d'un ballast à un multiple ou un sous-multiple de la cadence de trame d'une caméra qui est en train d'être utilisée dans le filmage d'images en mouvement, utilisant un appareil de la revendication 1, **caractérisé en ce que** le moyen de multiplication ou de division (6) est configuré pour forcer le courant à changer de direction lorsque l'obturateur de caméra est fermé.
